Europäisches Patentamt

European Patent Office

Office européen des brevets

(11) Publication number: **0 316 101**
**A2**

# EUROPEAN PATENT APPLICATION

(21) Application number: 88310253.5

(22) Date of filing: 01.11.88

(51) Int. Cl.4: **G01N 1/12 , G01N 1/14**

(30) Priority: 07.11.87 GB 8726148

(43) Date of publication of application:
17.05.89 Bulletin 89/20

(84) Designated Contracting States:
AT BE CH DE ES FR GB GR IT LI LU NL SE

(71) Applicant: FOSECO INTERNATIONAL LIMITED
285 Long Acre
Nechells Birmingham B7 5JR(GB)

(72) Inventor: Brown, Richard
6 Church Lane
Kings Bromley Burton-on-Trent DE13 7JI(GB)

(74) Representative: Shaw, Laurence
FOSECO HOLDING INTERNATIONAL LIMITED
Group Patents Department 285 Long Acre
Nechells Birmingham B7 5JR(GB)

(54) **Device for sampling molten metal.**

(57) A sampling device (1) to take a sample of molten metal comprises a holder (2) having a bore (2a) containing an evacuated glass tube (3), cooling means (4), preferably a coil, being present about the glass tube (3) so that the molten metal entering the tube (3) solidifies quickly and gases, particularly hydrogen, are trapped.

# DEVICE FOR SAMPLING MOLTEN METAL

The invention relates to a sampling device for taking a sample of molten metal from a container thereof to test the composition of the melt and like purposes. GB-A-1172283 discloses such a device comprising an evacuated glass tube which on contact with the molten metal is melted open, liquid metal is drawn into the tube to form a sample which solidifies and is then recovered for analysis. The glass tube is held in the through bore of a tubular holder as a press fit or by a cement or an adhesive.

A drawback with known sampling devices is that gases can escape from the molten metal sample as it cools. Also, where the tube is held in position by cement or adhesive, this material can release gases on contact with the molten metal which will be taken up by the sample to give a false reading.

There is a need for a sampling device in which the sample can be quickly received and caused to solidify so that gases contained therein cannot escape. This is especially true in the case of steels which have a low hydrogen content.

According to the invention in one aspect there is provided a sampling device for use in taking a sample of molten metal, the device comprising an elongate tubular holder having a through bore, an evacuated glass tube being present in the bore and having an end at or projecting beyond one end of the holder characterised in that means are present to chill molten metal received in the glass tube.

Preferably the chill means is shaped so as to allow the flow of air over the glass tube. When the glass tube is held in the holder by the chill means such that an air gap exists along the length of the tube a, vent is provided to atmosphere. The air gap tends to prevent heat from the surrounding molten metal reaching the sample in the holder which may otherwise delay solidification of the sample. The vent also ensures that any air in a slag cap, present on one end of the holder as explained below, is released to atmosphere and not trapped in the sample as air bubbles. The chill means may take a variety of forms. For example, the chill means may be a washer, provided with external cut-outs to form teeth which between then define air flow passages. The chill means may be internal, eg. a number of small holes. A number of such washers may be provided, longitudinally spaced along the glass tube. In another embodiment, the glass tube is mounted in a sleeve received in the bore of the holder, the sleeve having external spring fingers to engage the wall of the bore and internal fingers to hold the glass tube in the sleeve with longitudinally extending air passages inbetween. Preferably, the chill means comprises a helical coil. It is an advantage of the invention that such a helical coil can be located in the bore of the holder in an annular clearance between the inner wall of the bore and the outer wall of the glass tube and this can be the sole means of holding the parts together which in addition provides a barrier to the penetration by molten metal. When such penetration occurs in a known sampling device where the glass tube is a simple press-fit or is adhesively bonded, the metal and slag form a heat sink which delays solidification and increases the rate of dissipation of hydrogen out of the sample with the result that an inaccurate determination of gas content is rendered. The coil preferably ranges from 10 to 30mm in length. The length of the coil is a function of the circumference of the glass tube multiplied by the numbers of winding of the helix. The coil is preferably formed of steel wire.

A most important advantage of the device relates to its use for taking very hot samples eg. from large metallurgical ladles or converters where the sample remains liquid for an extended period of time and which sample may be lost by gravitational force when the sampling device is removed from the melt. The chill means rapidly and preferentially chills at the mouth of the glass tube to solidify the metal there and prevents the sample from draining away.

The holder may be a cardboard tube, preferably covered with a material to reduce the incidence of boiling or severe splashing which may be hazardous and/or may give rise to contamination. The material may be a coating of a refractory paint or a fibrous sleeve formed of aluminium silicate fibres, calcium silicate fibres, or a mixture of such fibres bonded by a binder such as a colloidal oxide hydrosol, eg. silica sol, alumina sol or the like, or a starch. Optionally the fibrous sleeve may contain a proportion of one or more refractory fillers selected from, eg. alumina, silica, olivine and calcined magnesite. The holder may itself be formed from the fibrous sleeve.

Preferably the evacuated glass tube has a thinner wall thickness at its exposed end to render that end preferentially meltable to enable the sample to be taken very quickly. It is also preferable to include inside the glass tube a strip or wire of a deoxidising agent such as a strip of foil with which to deoxidise the sample, eg aluminium or zirconium.

In some cases a layer of slag may be floating on the upper surface of the melt to be sampled. To prevent slag contamination of the sample a protective cap may be present at one end of the holder. In the past the slag cap of sampling devices has been fixed with a refractory cement or an adhesive which may give rise to a source of hydrogen contamination. To avoid hydrogen pick up from external sources it is a feature of the invention that the slag cap when used is a compression fit or is otherwise mechanically attached to the outer surface of the holder.

By use of a sampling device of the present invention the disadvantages of known devices for sampling the hydrogen content of steels may be substantially reduced or eliminated, particularly in the case of devices which risk contamination of the sample from an extraneous source of hydrogen eg. from the decomposition of a refractory cement or phenolic resin binder.

In another aspect, the invention provides a method of assembling a sampling device for taking a sample of molten metal, the device comprising an elongate tubular holder having a through bore and an evacuated glass tube received in the bore characterised by placing a coil about the glass tube and screwing the assembly so formed into the bore so that the glass tube is held in the holder in the absence of a cement or other adhesive and the coil is present in an annular clearance between the inner wall of the bore and the outer wall of the glass tube.

In another aspect, the invention provides a method of taking a sample of molten metal from a container thereof by dipping a sampling device into the molten metal and removing the device from the molten metal characterised in that the device is as defined above and in that the chill means increases the rate of solidification of the metal received in the device.

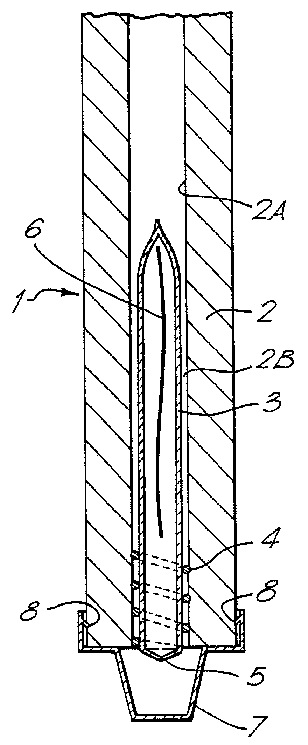

The invention is described with reference to the accompanying drawing which is a longitudinal section through part of a device according to the invention. A molten metal sample device 1, comprises an elongate tubular holder 2, having a length of 300 to 500 mm, an inner diameter of 12.5 mm and an outer diameter of 35mm, formed of aluminium silicate fibres bonded with colloidal silica sol. The holder 2 has a through bore or passageway 2A. An evacuated boro-silicate glass tube 3 having a length of 140mm, an inner diameter of 8mm and an outer diameter of 10mm is held in the passageway 2A by a helically wound steel wire 4 (only the first part of which is shown) in such a way that the thinner-walled end portion 5 projects beyond the end of the holder. The coil 4 is a 25mm length of helical coil having an inner diameter of 10mm and wire thickness of 1.6mm. A strip of aluminium foil 6 to deoxidise the sample is held within the tube. A steel cap 7 is located over the end of the holder, the cap being retained as a compression fit over the adjacent end of the holder and further retained by radial spikes 8 (only two of which are shown). The length of the holder 2 is sufficient to ensure that molten samples of steel may be taken by a steelworks operative wearing a minimum of additional protective clothing to that normally worn in a steelworks.

In use, the steel capped end of the device 1 is plunged to a depth of about 200 to 250mm into molten steel or like metal and immersed for about five seconds to ensure that the protective cap melts before the end 5 of the glass tube 3. As the thin end 5 of the glass tube melts, molten metal to be sampled is sucked into the tube and rapidly solidifies as the device is withdrawn from the melt. Solidification is hastened by the presence of the coil 4 of helically wound wire located around the glass tube 3. After withdrawal from the steel the sampling device now containing a sample of the steel is plunged into cold water and the glass tube is broken open by the thermal shock to release the sample from the tube.

The aluminium silicate fibre based holder is sufficiently refractory to protect the sample from attack by the molten steel and any slag for the duration of immersion in the steel. The holder does not give rise to any splashing of the molten steel or any extraneous source of hydrogen.

## Claims

1. A sampling device for use in taking a sample of molten metal, the device (1) comprising an elongate tubular holder (2) having a through bore (2A), an evacuated glass tube (3) being present in the bore (2A) and having an end (5) at or projecting beyond one end of the holder (2) characterised in that means (4) are present to chill molten metal received in the glass tube (3).

2. A device according to Claim 1 characterised in that the chill means (4) is shaped so as to allow the flow of air over the glass tube (3).

3. A device according to Claim 1 or 2 characterised in that the means (4) comprises a helical coil (4).

4. A device according to Claim 2 or 3 characterised in that the coil (4) comprises a helical coil (4) in the bore 2A in an annular clearance (2B) between the inner wall of the bore (2A) and the outer wall of the glass tube (3).

5. A device according to Claim 2, 3 or 4 characterised in that the helical coil (4) is formed of steel wire.

6. A device according to any of Claims 2 to 5 characterised in that the cooling coil (4) is dimensioned so that the glass tube (3) is held thereby in the bore (2A) in the absence of a cement or other adhesive.

7. A device according to any preceding Claim characterised in that the tubular holder (2) comprises aluminosilicate fibre or has a cover thereof.

8. A device according to any preceding Claim characterised in that an anti-slag cap (7) is present adjacent the end (5) in mechanical engagement with the external surface of the holder (2).

9. A method of assembling a sampling device for taking a sample of molten metal, the device (1) comprising an elongate tubular holder (2) having a through bore (2A) and an evacuated glass tube (3) received in the bore 2(A) characterised by placing a helical coil (4) about the glass tube (3) and screwing the assembly so formed into the bore (2) so that the glass tube (3) is held in the holder (2) in the absence of a cement or other adhesive and the coil (4) is present in an annular clearance (2B) between the inner wall of the bore (2A) and the outer wall of the glass tube (3).

10. A method of taking a sample of molten metal from a container thereof by dipping a sampling device into the molten metal and removing the device from the molten metal characterised in that the device (1) is according to any of Claims 1 to 8 and in that the chill means (4) increases the rate of solidification of the metal received in the device (1).